# EUROPEAN PATENT SPECIFICATION

(11) **EP 1 297 475 B1**
(45) Date of publication and mention of the grant of the patent: **24.03.2004**
(21) Application number: 01950106.3
(22) Date of filing: 05.07.2001
(51) Int. Cl.: G06F 17/60, G07F 7/10, H04L 12/14

(54) **METHOD AND SYSTEM AS WELL AS DATA CARRIER FOR AUTHENTICATING A CLIENT WHO DESIRES TO OBTAIN A SERVICE OR PRODUCT FROM A SUPPLIER**
VERFAHREN, SYSTEM UND DATENTRÄGER ZUM AUTHENTIFIZIEREN EINES KUNDEN MIT DEM WUNSCH EINE DIENSTLEISTUNG ODER EIN PRODUKT VON EINEM LIEFERANTEN ZU BEKOMMEN
PROCEDE ET SYSTEME AINSI QUE PORTEUSE DE DONNEES PERMETTANT L'AUTHENTIFICATION D'UN CLIENT SOUHAITANT OBTENIR UN SERVICE OU UN PRODUIT D'UN FOURNISSEUR

(30) Priority: 05.07.2000 NL 1015612
(43) Date of publication of application: 02.04.2003
(73) Proprietor: Helco Authentication Services B.V., 3431 HB Nieuwegein (NL)
(72) Inventor: JANSEN, Alexander Theodorus, 5431 WK Cuyk (NL)
(74) Representative: Prins, Adrianus Willem
(86) International application number: PCT/NL2001/000508
(87) International publication number: WO 2002/003285

(56) References cited:
- EP-A- 0 765 068
- EP-A- 0 813 325
- EP-A- 0 926 611
- WO-A-97/01920
- SIRBU M ET AL: "NETBILL: AN INTERNET COMMERCE SYSTEM OPTIMIZED FOR NETWORK- DELIVERED SERVICES" IEEE PERSONAL COMMUNICATIONS,IEEE COMMUNICATIONS SOCIETY,US, vol. 2, no. 4, 1 August 1995 (1995-08-01), pages 34-39, XP000517588 ISSN: 1070-9916

## Description

This invention relates to a method and a system for authenticating a client who desires to obtain a service or product from a supplier. The invention also relates to a data carrier intended for use in a system according to the invention for carrying out the method according to the invention.

The authentication of a client is particularly important if client and supplier are located at a relatively great distance from each other. The acceptance can take place orally or in writing. The necessary communication means may comprise, for instance, a connection per telephone, fax, telex, telegraph, post or computer network. The offer may have reached the client in different ways, for instance via the above communication means. It is noted that merchandise should be taken widely and may comprise transferable goods as well as services. The services may comprise, for instance, providing access to a computer network, such as an internet, access to specific servers or files on that network, supply of pay television or video-on-demand, or supply of a form of interactive multimedia. The supply of such services can be effected via a telephone or other cable connection, or via a wireless connection of, for instance, a wireless telephone or another wireless communication means.

The connection via a computer network may, for that matter, be established in different ways, for instance by using computer programs already installed on a computer, which programs seek connection with the supplier. Also, the client may make connection with the supplier by using a computer program provided on a computer data storage medium, such as a CD-ROM or diskette. The computer program may be temporarily entered into the RAM memory of the computer, but the program or associated computer files need not be placed on, for instance, a hard disk of the computer. It should be noted that a CD-ROM may also be a commercially available rectangular CD card, which is intended for use with a CD-ROM player.

A drawback of this method for selling merchandise is that it is difficult, if not impossible, for the supplier to check whether a client is in good or in bad faith. This is increased according as the distance between client and supplier is greater, for instance when client and supplier are in different countries or on different continents. Consequently, this method is relatively susceptible to fraud. A swindler can send, for instance, order information to the supplier, while this person gives incorrect information about his identity. In that case, the person is a pseudoclient. After receipt of the order information, the supplier may proceed to supply, the purchased products or services being put at the disposal of the pseudoclient. After supply, the supplier may try to demand payment from the pseudoclient, which does not succeed if he cannot find out the real identity of the pseudoclient. The same problem may arise if the payment is made by using a credit card number, which, for instance, is usual when selling via a computer network, such as an intranet or internet. A swindler may use a fictitious or a stolen credit card number to mislead a supplier. EP-A-0926611 proposes the validation of an Internet transaction by a customer placing a telephone call via the telephone network. This leaves the initiative for the validation with the customer.

It is an object of the present invention to remove the above drawbacks of the method while retaining the advantages thereof. It is therefore an object of the invention to provide a method for selling merchandise that is relatively little susceptible to fraud and gives the supplier more certainty about the identity of the client.

The invention therefore provides a method according to claim 1.

The use of this method provides the supplier with at least two checking means with respect to the identity of the client. The first checking means is the mobile telephone contact the supplier seeks with the client on the mobile communication network number he has received in the order information. If the order information is correct, he will find that client at that telephone number. If a telephone number is incorrect, this will not be the case. Moreover, the identity of the user of any telephone number can be found out, therefore also the identity of a swindler who calls his own telephone number. This may restrain a swindler from stating his telephone number.

The second checking means is the checking step to be performed by the authentication unit, in which the authentication unit checks whether the authentication information sent fits the reply information received. If the reply information does not have the desired contents, for instance because it does not contain a desired code, the authentication unit will not give a supply release and supply of the product or the service will therefore not take place.

If, during the checking step, the authentication unit discovers a discrepancy, the judgment will be negative. The discrepancy may have arisen because the client is a pseudoclient who has stated a false telephone number in the acceptance, which telephone number is not at his disposal. Consequently, this swindler cannot receive the authentication information. This has the result that the swindler will not be able to send the correct reply information to the authentication unit. Not only the supplier is protected by this method, but also the client is protected against pseudosuppliers. In fact, if a client who is in good faith accepts a purchase agreement and, subsequently, does not receive an authentication information from the authentication unit via his mobile communication network number, he knows or at least can suspect that he has to do with an unreliable supplier. In any case, no purchase can be effected.

According to a further elaboration of the invention, the method is characterized by the measures of claim 2.

Through the addition of the confirmation information to be sent via the first communication network, which information corresponds to the authentication information, and which can therefore only be at the disposal of the client if the authentication information has reached him via his mobile communication number, the supplier is given even more certainty. In fact, on the basis of the confirmation information, the supplier forms double check information and sends it to the authentication unit, which performs a second checking step, the result of which is involved in the sending or not sending of a supply release.

Thus, further checking steps can be added, which increase the security of the method, and which will be described in the subclaims.

The authentication information and the reply information may, for instance, be formed by an SMS message or a communication via the WAP protocol. The reply information may consist, for instance, of a simple reply to the authentication information received. According to a further elaboration of the invention, the authentication information may comprise a description of the products and/or services required by the client, the purchase price, and/or a transaction code.

According to a further elaboration of the invention, the authentication unit forms part of an institution independent of the supplier, such as, for instance, a banking institution or such a checking institution independent of client and supplier. The institution may administer a credit balance of the client, and the institution pays the supplier from the credit balance of the client a purchase price agreed during the supply when the supply release has been sent to the supplier.

Such an independent checking institution, such as, for instance, a banking institution, may function as a reliable third party for the client as well as for the supplier.

Thus, payment can be made rapidly and safely. Moreover, the fact that the client is a client of the checking institution gives the supplier an extra security that the client is reliable.

Preferably, the authentication unit stores the transaction information received from a client or supplier for a limited period of time.

This information is thus prevented from remaining for an unlimited period of time in, for instance, an administrative system of the checking institution through one of the parties, for whatever reason, omitting to send the information required for the supply to the authentication unit.

The supply release can, for instance, give the client an access code, with which access code the client can log into a network server controlled by the supplier, via a network connection of a computer network, so that the client can exchange computer data with this network server. Preferably, the client can only log into the network server of the supplier after the supplier has received a confirmative result from the checking institution about the check or the transaction information from the client received by the checking institution is identical to the received transaction information from the supplier.

This is a reliable method, with which the client can gain access to the information on a server of a computer network controlled by the supplier. The client may, for instance, gain access to computer files, such as sound, picture or video files, which are available on the server after he has logged in. The client may take over these files, for instance by copying them to a computer or mobile telephone controlled by him or to another communication device capable of being coupled to a computer network. Also, the client may use a service delivered to him via the server after logging in. This service may, for instance, comprise participation in a chat box or video conference, or online advice from, for instance, a physician, lawyer, computer expert, broker, notary or patent attorney about matters in which the expertise of the person in question resides.

The invention also provides a system for carrying out the method according to the invention. This system will be described in claim 13.

The automated system comprises computers provided with programs for carrying out this method and peripheral equipment, such as communication means. This is advantageous because such a system can accompany relatively many transactions without using paid workers. Consequently, the method can be carried out relatively rapidly and inexpensively.

The system according to the invention may also assume the form of a vending machine for cigarettes, beverages or medicines. Here the client computer is in the same housing as the supplier computer. In fact, in such a vending machine, the client computer and the supplier computer, and optionally even the authentication computer, may be integrated into the same computer.

The invention further relates to a data carrier, by means of which a computer of a potential client can be made suitable for forming part of the above system as client computer. According to the invention, the data carrier, such as a CD-ROM, a smart card, a floppy disk, or the like, is provided with digital information, which, when entered into the computer of a client, makes this computer suitable as a client computer apparently intended for a system according to the invention. Preferably, the data carrier is a CD-ROM with credit card dimensions, and the information stored thereon is such that, when this information is entered into a computer, this client computer fully automatically leads the client through the purchasing process.

The invention will be described in more detail with reference to three exemplary embodiments and the accompanying drawing.
Fig. 1 shows a schematic diagram of a first exemplary embodiment;
Fig. 2 shows a schematic diagram of a second exemplary embodiment; and
Fig. 3 shows a schematic diagram of a third exemplary embodiment.

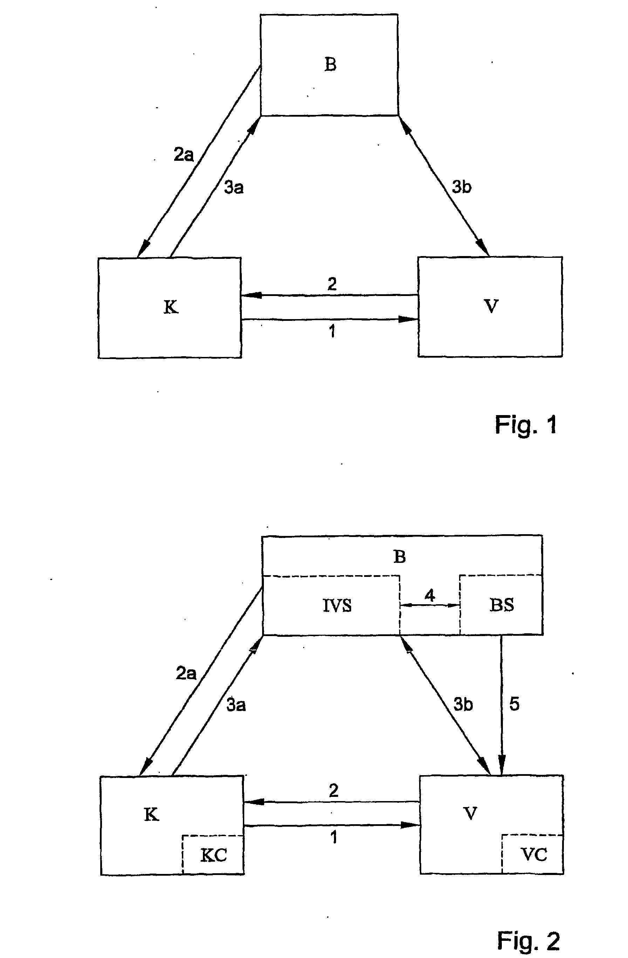

In each of Figs. 1-3, a method for authenticating a client who desires to obtain a product or service is schematically shown. A supply agreement is effected through a supplier V receiving an acceptance of an offer or order information from a client K via a communication connection 1. This connection 1 may be, for instance, a telephone connection, or a connection via a computer network, the post, and the like. The acceptance or order information comprises at least one mobile telephone number, and optionally an address for the supply of the merchandise. The order information may likewise comprise a postal code of the client. After receipt of the acceptance, the supplier V or an authentication unit B on behalf of the supplier calls the stated telephone number. Consequently, in the first place, it is found out whether the mobile telephone number is actually used by client K. If the client K has not stated his own telephone number, no telephone connection 2 will be established between the two parties. Consequently, the supplier V knows that the client K is a pseudoclient so that he can prevent himself from being cheated.

If the stated telephone number is correct, the supplier V or the authentication unit B engaged by him will pass authentication information; such as, for instance, a transaction code, to the client K via the connection 2 or 2a. Besides, it can be communicated which merchandise has been purchased, what the agreed purchase price is, and it can be asked whether an optionally stated address of the client K is correct. Subsequently, the client K can give reply information, which, for instance, comprises the transaction code received by him, to the authentication unit B via a mobile communication connection 3a. The authentication unit has already received these data from the supplier in the form of supplier information via connection 3b. Connection 3b may be a normal data network connection. On the basis of the supplier information, the authentication unit has generated the authentication information. Subsequently, the authentication unit B, which, in this case, is placed with a banking institution, checks whether the reply information fits the authentication information. More in particular, the authentication unit B checks whether the transaction codes received from the client K and supplier V are identical and sends a transaction advice to the supplier, which is dependent on the result of the check. The transaction advice comprises a supply release if the reply information fits the authentication information and does not send such a supply release if the reply information and the authentication information do not fit together. If the result of the check is confirmative, it has been proved that the client K has received his transaction code via his own telephone number and telephone connection 2 or 2a of the supplier V or the authentication unit B engaged by the supplier. This proof is a second guarantee for the supplier V that the client K is in good faith. To carry out this method, the client and the supplier preferably have respectively a client computer KC and a supplier computer VC at their disposal.

In order to build in an additional check, the client, after receipt of the authentication information, which, for instance, comprises a transaction code, can also be requested to send, on the basis of that information, confirmation information to the supplier V. On the basis of this confirmation information, the supplier can compose so-called double check information, which he sends to the authentication unit B via connection 3b. In the authentication unit B, this double check information can be compared with the reply information received. If the double check information fits the reply information, and if also the other checking steps have been completed confirmatively, the authentication unit will send a supply release.

The exemplary embodiment shown in Fig. 2 differs from the exemplary embodiment shown in Fig. 1 in that the supplier information and reply information entering authentication unit B is processed automatically and that payment of a purchase price can be made automatically. To this end, the banking institution B is provided with an automated information processing system IVS, while the client K has placed a bank balance with the bank. This bank balance is administered by an automated banking system BS. The information processing system IVS is provided with communication means, not shown, so that the client K can send reply information and the supplier V can send supplier information, which, for instance, both comprise a transaction code, to the system IVS via the connections 3a and 3b, respectively. Furthermore, the system IVS is provided with a control, not shown, for instance a computer, which compares the incoming information with each other. The control informs the supplier V of the result of this check. Moreover, the control can pay a purchase price from the bank balance of the client K to the supplier V, which is indicated by an arrow 5. To this end, the control is coupled to the banking system BS via a system coupling 4, which, by order of at least the information processing system IVS, can transfer money from the bank balance to a bank account of the supplier. The coupling 4 between both systems IVS, BS may be, for instance, a computer network connection.

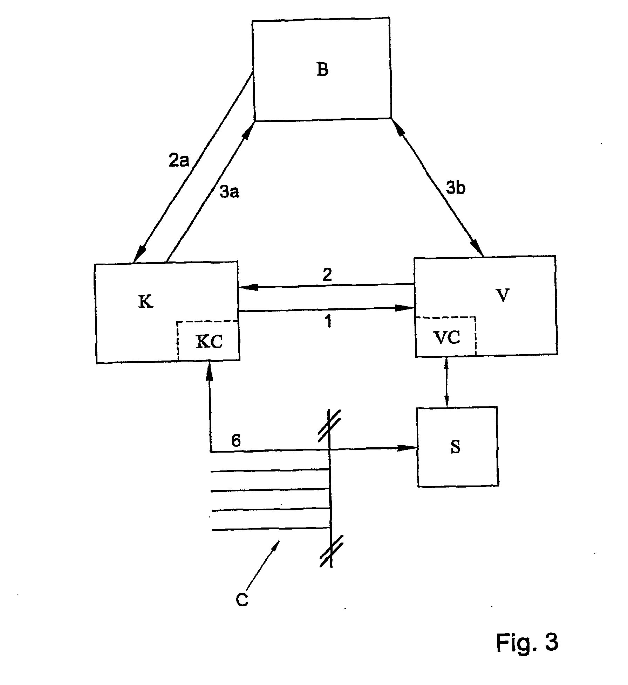

The exemplary embodiment shown in Fig. 3 differs from the exemplary embodiment shown in Fig. 1 in that the supplier V manages a network server S, which communicates with a computer network C. The network server S can supply goods or services to any client K, who therefore has to log into the network server via a network connection 6 by using an access code. To establish this connection 6, the client K can use a computer or mobile telephone connected to the network C or another computer network communication device.

According to the present invention, the client obtains the access code from the supplier V according to the described method for purchasing merchandise. The access code forms part of the transaction information, which the supplier V or the authentication unit B sends to the client K via the telephone connection 2 or 2a. Preferably, the supplier V puts his goods and/or services to be supplied only at the disposal of the client K if, via communication connection 3b, he has received from the authentication unit B a confirmative result about the check on the transaction information received at the authentication unit B.

It is self-explanatory that the present invention is not limited to the exemplary embodiment described, but that various amendments are possible within the scope of the invention.

## Claims

1. A method for authenticating a client who desires to obtain a service or product from a supplier,
- wherein the client, via a first communication network, enters into communication with the supplier,
- wherein the client, via the communication network, gives the supplier order information, which comprises at least one mobile communication network number, at which the client can be reached, and information about the or each service or product the client wishes to obtain,
- wherein the supplier, on the basis of this order information, composes supplier information, which comprises at least the mobile communication network number stated by the client, and gives it to an authentication unit,
- wherein the authentication unit, on the basis of the supplier information received, composes authentication information and sends it to the mobile communication network number of the client via a second mobile communication network,
- wherein the client, with his mobile communication device having the relevant mobile communication network number, composes reply information and sends it to the authentication unit to confirm the authentication information received,
- wherein the authentication unit performs at least one checking step,
- wherein, if the or each checking step is followed by a confirmative reply, the authentication unit sends a supply release to the supplier, on the basis of which the supplier further provides the supply of the service or the product, and wherein, if in one of the at least one checking steps to be performed a negative reply follows, the authentication unit does not send a supply release to the supplier so that supply of the service or the product does not take place,
- wherein, in a first checking step, the authentication unit checks whether the authentication information sent fits the reply information received.

2. A method according to claim 1, wherein the client, after receipt of the authentication information, besides sending via the mobile network of the reply information, also sends to the supplier, via the first communication network, confirmation information corresponding to the authentication information, wherein the supplier, on the basis of the confirmation information, composes double check information and sends it to the authentication unit, and wherein the authentication unit performs a second checking step, in which it is checked whether the double check information fits the reply information.

3. A method according to claim 1 or 2, wherein the supplier information, the authentication information, the reply information and, if applicable, the confirmation information and the double check information all contain a similar transaction code.

4. A method according to any one of claims 1 - 3, **characterized in that** the authentication unit forms part of an institution independent of the supplier, such as, for instance, a banking institution or such a checking institution independent of the supplier.

5. A method according to claim 4, **characterized in that** the institution (B) administers a credit balance of the client (K), wherein the institution (B) pays the supplier (V) from the balance of the client (K) a purchase price agreed during the supply when the supply release has been sent to the supplier.

6. A method according to any one of the preceding claims, **characterized in that** the order information, the supplier information, and the reply information comprise a postal code of the client (K), wherein, in a third checking step, the authentication unit checks whether the postal code of the supplier information corresponds to the postal code of the reply information.

7. A method according to claims 2 and 6, wherein the confirmation information and the double check information also comprise a postal code, wherein, in a fourth checking step, the authentication unit checks whether the postal code stored in the supplier information, the reply information, the confirmation information and the double check information is always the same.

8. A method according to any one of the preceding claims, **characterized in that** the authentication information comprises a description of the products and/or services required by the client (K).

9. A method according to any one of the preceding claims, **characterized in that** the authentication information comprises a purchase price of the products and/or services required by the client (K).

10. A method according to any one of the preceding claims, **characterized in that** the authentication unit (B) stores for a limited period of time the reply information received from a client (K) and/or supplier (V) or supplier information.

11. A method according to any one of the preceding claims, wherein the authentication unit forms part of a system of the supplier.

12. A method according to any one of the preceding claims, wherein the sending of the authentication information and the reply information takes place in the form of a WAP or SMS message.

13. A system for carrying out the method according to any one of the preceding claims, wherein the system comprises a client computer connected to a first communication network, such as, for instance, the internet, a supplier computer connected to a first communication network, and an authentication computer, which is in or can be brought into communication connection with the supplier computer, and which is arranged to send and receive information via a mobile communication network, wherein the client computer is arranged to enter, via the first communication network, into communication with the supplier computer,
- wherein the client computer is arranged to give the supplier computer, via the communication network, order information, which comprises at least one mobile communication network number, at which the client can be reached, and information about the or each service or product the client wishes to obtain,
- wherein the supplier computer is arranged to compose, on the basis of this order information, supplier information, which comprises at least the mobile communication network number stated by the client, and give it to the authentication computer,
- wherein the authentication computer is arranged to compose, on the basis of the supplier information received, authentication information and send it to the mobile communication network number of the client via a second mobile communication network,
- wherein the authentication computer is arranged to receive and process reply information, which reply information has been composed by the client, with his mobile communication device having the relevant mobile communication network number, and sent to confirm the authentication information received,
- wherein the authentication unit is arranged to perform at least one checking step,
- wherein, if the or each checking step is followed by a confirmative reply, the authentication unit is arranged to send a supply release to the supplier computer, on the basis of which the supplier further provides the supply of the service or the product, and wherein, if in one of the at least one checking steps to be performed, a negative reply follows, the authentication unit is arranged not to send a supply release to the supplier so that supply of the service or the product does not take place
- wherein the authentication computer is arranged to check in a first checking step whether the authentication information sent fits the reply information received.

14. A system according to claim 13, wherein the client computer, after receipt of the authentication information, is arranged to send to the supplier computer, via the first communication network, confirmation information corresponding to the authentication information, wherein the supplier computer is arranged to compose, on the basis of the confirmation information, double check information and to send it to the authentication computer, and wherein the authentication computer is arranged to perform a second checking step, in which it is checked whether the double check information fits the reply information.

15. A system according to any one of claims 13 - 14, **characterized in that** the authentication computer forms part of an institution independent of the supplier, such as, for instance, a banking institution or such a checking institution independent of client and supplier.

16. A system according to claim 15, **characterized in that** the institution (B) administers a credit balance of the client (K), wherein the authentication computer of the institution (B) is arranged to transfer to the supplier (V) from the bank balance of the client (K) a purchase price agreed during the supply when the supply release has been sent to the supplier.

17. A system according to any one of claims 13 - 16, **characterized in that** the order information, the supplier information, and the reply information comprise a postal code of the client (K), wherein the authentication unit is arranged to check in a third checking step whether the postal code of the supplier information corresponds to the postal code of the reply information.

18. A system according to claims 14 and 17, wherein the confirmation information and the double check information also comprise a postal code of the client, wherein the authentication computer is arranged to check in a fourth checking step whether the postal code stored in the supplier information, the reply information, the confirmation information and the double check information is always the same.

19. A system according to any one of claims 13 - 18, **characterized in that** authentication information comprises a description of the products and/or services required by the client (K).

20. A system according to any one of claims 13 - 19, **characterized in that** the authentication unit (B) is arranged to store for a limited period of time the reply information and/or supplier information received from a client (K) and/or supplier (V).

21. A system according to at least claim 13, wherein the authentication computer forms part of a computer system of the supplier.

22. A system according to any one of claims 13 - 21, wherein the authentication computer is arranged to send the authentication information and receive the reply information in the form of a WAP or SMS message.

23. A data carrier, such as a CD-ROM, a smart card, a floppy disk, or the like, wherein the data carrier is provided with digital information, which, when entered into the computer of a client, makes this computer suitable as client computer apparently intended for a system according to any one of claims 13 - 22.

24. A data carrier according to claim 23, **characterized in that** it is a CD-ROM with credit card dimensions.

25. A data carrier according to claim 23 or 24, **characterized in that** the information stored thereon, when entered into a computer, is such that the client computer fully automatically leads the client through the order process.

## Patentansprüche

1. Verfahren zum Authentifizieren eines Kunden, der eine Dienstleistung oder ein Produkt von einem Lieferanten zu erhalten wünscht,
- wobei der Kunde über ein erstes Kommunikationsnetz mit dem Lieferanten in Kommunikationsverbindung tritt,
- wobei der Kunde über das Kommunikationsnetz dem Lieferanten Auftragsinformationen übermittelt, die mindestens eine Nummer des mobilen Netzes, über das der Kunde erreichbar ist, und Informationen über die/das oder jede/jedes Dienstleistung oder Produkt, die/das der Kunde zu erhalten wünscht, enthalten,
- wobei der Lieferant anhand dieser Auftragsinformationen Lieferanteninformationen zusammenstellt, die mindestens die von dem Kunden genannte Nummer des mobilen Kommunikationsnetzes enthalten, und diese an eine Authentifiziereinheit übermittelt,
- wobei die Authentifiziereinheit anhand der empfangenen Lieferanteninformationen Authentifizierinformationen zusammenstellt und diese über ein zweites mobiles Kommunikationsnetz an die Nummer des mobilen Kommunikationsnetzes des Kunden sendet,
- wobei der Kunde, dessen mobile Kommunikationsvorrichtung die relevante Nummer des mobilen Kommunikationsnetzes hat, Antwortinformationen zusammenstellt und diese zum Bestätigen der empfangenen Authentifizierinformationen an die Authentifiziereinheit sendet,
- wobei die Authentifizlereinheit mindestens einen Prüfschritt durchführt,
- wobei, wenn dem oder jedem Prüfschritt eine bestätigende Antwort folgt, die Authentifiziereinheit eine Lieferfreigabe an den Lieferanten sendet, anhand derer der Lieferant die Lieferung der Dienstleistung oder des Produkts in die Wege leitet, und wobei, wenn einem des mindestens einen durchzuführenden Prüfschritts eine negative Antwort folgt, die Authentifiziereinheit keine Lieferfreigabe an den Lieferanten sendet, so dass keine Lieferung der Dienstleistung oder des Produkts erfolgt,
- wobei in einem ersten Prüfschritt die Authentifiziereinheit prüft, ob die gesendeten Authentifizierinformationen zu den empfangenen Antwortinformationen passen.

2. Verfahren nach Anspruch 1, bei dem der Kunde nach Empfang der Authentifizierinformationen neben dem Senden der Antwortinformationen über das mobile Netz ferner dem Lieferanten über das erste Kommunikationsnetz Bestätigungsinformationen entsprechend den Authentifizierinformationen sendet, wobei der Lieferant anhand der Bestätigungsinformationen Doppelprüfinformationen zusammenstellt und diese an die Authentifiziereinheit sendet, und wobei die Authentifiziereinheit einen zweiten Prüfschritt durchführt, in dem geprüft wird, ob die Doppelprüfinformationen zu den Antwortinformationen passen.

3. Verfahren nach Anspruch 1 oder 2, bei dem die Lieferanteninformationen, die Authentifizierinformationen, die Antwortinformationen und, falls vorhanden, die Bestätigungsinformationen und die Doppelprüfinformationen einen im wesentlichen gleichen Transaktionscode enthalten.

4. Verfahren nach einem der Ansprüche 1-3, **dadurch gekennzeichnet, dass** die Authentifiziereinheit Teil einer von dem Lieferanten unabhängigen Institution ist, wie z. B, einer Bank oder einer von dem Lieferanten unabhängigen Prüfinstitution.

5. Verfahren nach Anspruch 4, **dadurch gekennzeichnet, dass** die Institution (B) ein Guthaben des Kunden (K) verwaltet, wobei die Institution (B) dem Lieferanten (V) aus dem Guthaben des Kunden (K) einen für die Lieferung vereinbarten Kaufpreis bezahlt, wenn die Lieferfreigabe an den Lieferanten gesendet worden ist.

6. Verfahren nach einem der vorhergehenden Ansprüche, **dadurch gekennzeichnet, dass** die Auftragsinformationen, die Lieferanteninformationen und die Antwortinformationen eine Postleitzahl des Kunden (K) enthalten, wobei in einem dritten Prüfschritt die Authentifiziereinheit prüft, ob die Postleitzahl der Lieferanteninformationen der Postleitzahl der Antwortinformationen entspricht.

7. Verfahren nach Anspruch 2 und 6, bei dem die Bestätigungsinformationen und die Doppelprüfinformationen ebenfalls eine Postleitzahl enthalten, wobei in einem vierten Prüfschritt die Authentifiziereinheit prüft, ob die in den Lieferanteninformationen, den Antwortinformationen, den Bestätigungsinformationen und den Doppelprüfinformationen gespeicherte Postleitzahl immer die gleiche ist.

8. Verfahren nach einem der vorhergehenden Ansprüche, **dadurch gekennzeichnet, dass** die Authentifizierinformationen eine Beschreibung der von dem Kunden (K) gewünschten Produkte und/oder Dienstleistungen enthalten.

9. Verfahren nach einem der vorhergehenden Ansprüche, **dadurch gekennzeichnet, dass** die Authentifizierinformationen einen Kaufpreis für die von dem Kunden (K) gewünschten Produkte und/oder Dienstleistungen enthalten.

10. Verfahren nach einem der vorhergehenden Ansprüche, **dadurch gekennzeichnet, dass** die Authentifiziereinheit (B) über einen begrenzten Zeitraum die von einem Kunden (K) und/oder einem Lieferanten (V) empfangenen Antwortinformationen oder die Lieferanteninformationen speichert.

11. Verfahren nach einem der vorhergehenden Ansprüche, bei dem die Authentifizlereinheit Teil eines Lieferantensystems ist.

12. Verfahren nach einem der vorhergehenden Ansprüche, bei dem das Senden der Authentifizierinformationen und der Antwortinformationen in Form einer WAP- oder SMS-Mitteilung erfolgt.

13. System zum Durchführen des Verfahrens nach einem der vorhergehenden Ansprüche, wobei das System einen mit einem ersten Kommunikationsnetz, wie z. B. dem Internet, verbundenen Kundencomputer, einen mit einem ersten Kommunikationsnetz verbundenen Lieferantencomputer und einen Authentifiziercomputer aufweist, der mit dem Lieferantencomputer in Kommunikationsverbindung steht oder gebracht wird und der zum Senden und Empfangen von Informationen über ein mobiles Kommunikationsnetz vorgesehen ist, wobei der Kundencomputer dazu vorgesehen ist, eine Kommunikation mit dem Lieferantencomputer über das erste Kommunikationsnetz aufzunehmen,
- wobei der Kundencomputer dazu vorgesehen ist, Auftragsinformationen über das Kommunikationsnetz an den Lieferantencomputer zu übermitteln, wobei die Auftragsinformationen mindestens eine Nummer des mobilen Netzes, über das der Kunde erreichbar ist, und Informationen über die/das oder jede/jedes Dienstleistung oder Produkt, die/das der Kunde zu erhalten wünscht, enthalten,
- wobei der Lieferantencomputer dazu vorgesehen ist, anhand dieser Auftragsinformationen Lieferanteninformationen zusammenzustellen, die mindestens die von dem Kunden genannte Nummer des mobilen Kommunikationsnetzes enthalten, und diese an eine Authentifiziereinheit zu übermitteln,
- wobei der Authentifiziercomputer dazu vorgesehen ist, anhand der empfangenen Lieferanteninformationen Authentifizierinformationen zusammenzustellen und diese über ein zweites mobiles Kommunikationsnetz an die Nummer des mobilen Kommunikationsnetzes des Kunden zu senden,
- wobei der Authentifiziercomputer dazu vorgesehen ist, von dem Kunden zusammengestellte Antwortinformationen zu empfangen und zu verarbeiten, wobei die mobile Kommunikationsvorrichtung des Kunden die relevante Nummer des mobilen Kommunikationsnetzes hat, und die Antwortinformationen zum Bestätigen der empfangenen Authentifizierinformationen zu senden,
- wobei die Authentifiziereinheit dazu vorgesehen ist, mindestens eines Prüfschritt durchzuführen,
- wobei, wenn dem oder jedem Prüfschritt eine bestätigende Antwort folgt, die Authentifiziereinhelt dazu vorgesehen ist, eine Lieferfreigabe an den Lieferantencomputer zu senden, anhand derer der Lieferant die Lieferung der Dienstleistung oder des Produkts in die Wege leitet, und wobei, wenn einem des mindestens einen durchzuführenden Prüfschritts eine negative Antwort folgt, die Authentifiziereinheit dazu vorgesehen ist, keine Lieferfreigabe an den Lieferanten zu senden, so dass keine Lieferung der Dienstleistung oder des Produkts erfolgt,
- wobei der Authentifiziercomputer dazu vorgesehen ist, in einem ersten Prüfschritt zu prüfen, ob die gesendeten Authentifizierinformationen zu den empfangenen Antwortinformationen passen.

14. System nach Anspruch 13, bei dem der Kundencomputer nach Empfang der Authentifizierinformationen dazu vorgesehen ist, Bestätigungsinformationen entsprechend den Authentifizierinformationen über das erste Kommunikationsnetz an den Lieferantencomputer zu senden, wobei der Lieferantencomputer dazu vorgesehen ist, Doppelprüfinformationen anhand der Bestätigungsinformationen zusammenzustellen und die Doppelprüfinformationen an den Authentifiziercomputer zu senden, und wobei der Authentifiziercomputer dazu vorgesehen ist, einen zweiten Prüfschritt durchzuführen, in dem geprüft wird, ob die Doppelprüfinformationen zu den Antwortinformationen passen.

15. System nach einem der Ansprüche 13-14, **dadurch gekennzeichnet, dass** der Authentifiziercomputer Teil einer von dem Lieferanten unabhängigen Institution ist, wie z. B. einer Bank oder einer von dem Kunden und dem Lieferanten unabhängigen Prüfinstitution.

16. System nach Anspruch 15, **dadurch gekennzeichnet, dass** die Institution (B) ein Guthaben des Kunden (K) verwaltet, wobei der Authentifiziercomputer der Institution (B) dazu vorgesehen ist, einen für die Lieferung vereinbarten Kaufpreises aus dem Guthaben des Kunden (K) an den Lieferanten (V) zu überweisen, wenn die Lieferfreigabe an den Lieferanten gesendet worden ist.

17. System nach einem der Ansprüche 13-16, **dadurch gekennzeichnet, dass** die Auftragsinformationen, die Lieferanteninformationen und die Antwortinformationen eine Postleitzahl des Kunden (K) enthalten, wobei die Authentifiziereinheit dazu vorgesehen ist, in einem dritten Prüfschritt zu prüfen, ob die Postleitzahl der Lieferanteninformationen der Postleitzahl der Antwortinformationen entspricht.

18. System nach Anspruch 14 und 17, bei dem die Bestätigungsinformationen und die Doppelprüfinformationen ebenfalls eine Postleitzahl enthalten, wobei der Authentifiziercomputer dazu vorgesehen ist, in einem vierten Prüfschritt zu prüfen, ob die in den Lieferanteninformationen, den Antwortinformationen, den Bestätigungsinformationen und den Doppelprüfinformationen gespeicherte Postleitzahl immer die gleiche ist.

19. System nach einem der Ansprüche 13-18, **dadurch gekennzeichnet, dass** die Authentifizierinformationen eine Beschreibung der von dem Kunden (K) gewünschten Produkte und/oder Dienstleistungen enthalten.

20. System nach einem der Ansprüche 13-19, **dadurch gekennzeichnet, dass** die Authentifiziereinheit (B) dazu vorgesehen ist, die Antwortinformationen und/oder die von einem Kunden (K) und/oder einem Lieferanten (V) empfangenen Lieferanteninformationen über einen begrenzten Zeitraum zu speichern.

21. System mindestens nach Anspruch 13, bei dem der Authentifiziercomputer Teil eines Computersystems des Lieferanten ist.

22. System nach einem der Ansprüche 13-21, bei dem der Authentifiziercomputer zum Senden der Authentifizierinformationen und Empfangen der Antwortinformationen in Form einer WAP- oder SMS-Mitteilung vorgesehen ist.

23. Datenträger, wie z. B. eine CD-ROM, eine Chipkarte, eine Diskette o. dgl., wobei der Datenträger digitale Informationen enthält, die bei Eingabe in den Computer eines Kunden bewirken, dass dieser Computer als Kundencomputer für ein System nach einem der Ansprüche 13-22 geeignet ist.

24. Datenträger nach Anspruch 23, **dadurch gekennzeichnet, dass** der Datenträger eine CD-ROM mit den Abmessungen einer Kreditkarte ist.

25. Datenträger nach Anspruch 23 oder 24, **dadurch gekennzeichnet, dass** die auf dem Datenträger gespeicherten Informationen bei Eingabe in einen Computer bewirken, dass der Kundencomputer den Kunden vollautomatisch durch den Auftragsvorgang führt.

## Revendications

1. Procédé d'authentification d'un client désirant obtenir un service ou un produit d'un fournisseur,
- dans lequel, le client, par l'intermédiaire d'un premier réseau de communications, entre en communication avec le fournisseur,
- dans lequel, le client, par l'intermédiaire du réseau de communications, donne au fournisseur une information de commande, qui comprend au moins un numéro de réseau de communications mobile, auquel le client peut être atteint, et une information concernant le ou chaque service ou produit que le client désire obtenir,
- dans lequel le fournisseur, en fonction de cette information de commande, compose une information de fournisseur, qui comprend au moins le numéro de réseau de communications mobile indiqué par le client, et la délivre à une unité d'authentification,
- dans lequel l'unité d'authentification, en fonction de l'information fournisseur reçue, compose une information d'authentification et l'envoie au numéro de réseau de communications mobile du client par l'intermédiaire d'un second réseau de communications mobile,
- dans lequel le client, avec son dispositif de communications mobile ayant le numéro de réseau de communications mobile pertinent, compose une information de réponse et l'envoie à l'unité d'authentification pour confirmer l'information d'authentification reçue,
- dans lequel l'unité d'authentification effectue au moins une étape de vérification,
- dans lequel, si la ou chaque étape de vérification est suivie d'une réponse de confirmation, l'unité d'authentification envoie une autorisation de fourniture au fournisseur, en fonction de laquelle le fournisseur assure en outre la fourniture du service ou du produit, et dans lequel, si dans l'une au moins des étapes de vérification à effectuer suit une réponse négative, l'unité d'authentification n'envoie pas une autorisation de fourniture au fournisseur de sorte que la fourniture du service ou du produit n'a pas lieu,
- dans lequel, au cours d'une première étape de vérification, l'unité d'authentification vérifie si l'information d'authentification émise satisfait à l'information de réponse reçue.

2. Procédé selon la revendication 1, dans lequel le client, après réception de l'information d'authentification, en plus d'envoyer par l'intermédiaire du réseau mobile l'information de réponse, envoie également au fournisseur, par l'intermédiaire du premier réseau de communications, une information de confirmation correspondant à l'information d'authentification, dans lequel, le fournisseur, en fonction de l'information de confirmation, compose une information de double vérification et l'envoie à l'unité d'authentification, et dans lequel l'unité d'authentification effectue une seconde étape de vérification, au cours de laquelle il est vérifié si l'information de double vérification correspond à l'information de réponse.

3. Procédé selon la revendication 1 ou 2, dans lequel l'information fournisseur, l'information d'authentification, l'information de réponse et, si elles sont applicables, l'information de confirmation et l'information de double vérification contiennent toutes un code de transaction similaire.

4. Procédé selon l'une quelconque des revendications 1 à 3, **caractérisé en ce que** l'unité d'authentification fait partie d'une institution indépendante du fournisseur, telle que, par exemple, une institution bancaire ou une institution de vérification indépendantes du fournisseur.

5. Procédé selon la revendication 4, **caractérisé en ce que** l'institution (B) gère un reste de crédit du client (K), dans lequel l'institution (B) paie le fournisseur (V) à partir du reste de crédit du client (K) un prix d'achat convenu durant la fourniture lorsque l'autorisation de fourniture a été envoyée au fournisseur.

6. Procédé selon l'une quelconque des revendications précédentes, **caractérisé en ce que** l'information de commande, l'information fournisseur, et l'information de réponse comportent un code postal du client (K), dans lequel, au cours d'une troisième étape de vérification, l'unité d'authentification vérifie si le code postal de l'information fournisseur correspond au code postal de l'information de réponse.

7. Procédé selon les revendications 2 et 6, dans lequel l'information de confirmation et l'information de double vérification comportent également un code postal,
dans lequel, au cours d'une quatrième étape de vérification, l'unité d'authentification vérifie si le code postal mémorisé dans l'information fournisseur, l'information de réponse, l'information de confirmation et l'information de double vérification est toujours le même.

8. Procédé selon l'une quelconque des revendications précédentes, **caractérisé en ce que** l'information d'authentification comprend une description des produits et/ou services demandés par le client (K).

9. Procédé selon l'une quelconque des revendications précédentes, **caractérisé en ce que** l'information d'authentification comprend un prix d'achat des produits et/ou services demandés par le client (K).

10. Procédé selon l'une quelconque des revendications précédentes, **caractérisé en ce que** l'unité d'authentification (B) conserve pendant une période de temps limitée l'information de réponse reçue d'un client (K) et/ou d'un fournisseur (V) ou une information fournisseur.

11. Procédé selon l'une quelconque des revendications précédentes, dans lequel l'unité d'authentification fait partie d'un système du fournisseur.

12. Procédé selon l'une quelconque des revendications précédentes, dans lequel l'émission de l'information d'authentification et de l'information de réponse a lieu sous la forme d'un message WAP ou SMS.

13. Système de mise en oeuvre du procédé selon l'une quelconque des revendications précédentes, dans lequel le système comprend un ordinateur client connecté à un premier réseau de communications, tel que, par exemple, l'internet, un ordinateur fournisseur connecté à un premier réseau de communications , et un ordinateur d'authentification, qui est en ou peut être mis en communication avec l'ordinateur fournisseur, et qui est agencé pour émettre et recevoir une information par l'intermédiaire d'un réseau de communications mobile, dans lequel l'ordinateur client est agencé pour entrer, par l'intermédiaire du premier réseau de communications, en communication avec l'ordinateur fournisseur,
dans lequel l'ordinateur client est agencé pour donner à l'ordinateur fournisseur, par l'intermédiaire du réseau de communications, une information de commande, qui comprend au moins un numéro de réseau de communications mobile, auquel le client peut être atteint, et une information concernant le ou chaque service ou produit que le client désire obtenir,
dans lequel l'ordinateur fournisseur est agence pour composer, en fonction de cette information de commande, une information fournisseur, qui comprend au moins le numéro de réseau de communications mobile indiqué par le client, et le délivre à l'ordinateur d'authentification,
dans lequel l'ordinateur d'authentification est agencé pour composer, en fonction de l'information fournisseur reçue, une information d'authentification et l'envoyer au numéro de réseau de communications mobile du client par l'intermédiaire d'un second réseau de communications mobile,
dans lequel l'ordinateur d'authentification est agencé pour recevoir et traiter une information de réponse, information de réponse qui a été composée par le client, avec son dispositif de communications mobile ayant le numéro de réseau de communications mobile pertinent, et envoyée pour confirmer l'information d'authentification reçue,
dans lequel l'unité d'authentification est agencée pour effectuer au moins une étape de vérification,
dans lequel, si la ou chaque étape de vérification est suivie d'une réponse de confirmation, l'unité d'authentification est agencée pour émettre une autorisation de fourniture à l'ordinateur fournisseur, en fonction de laquelle le fournisseur assure la fourniture du service ou du produit, et dans lequel, si dans l'une au moins des étapes de vérification à effectuer, succède une réponse négative, l'unité d'authentification est agencée pour ne pas envoyer une autorisation de fourniture au fournisseur de sorte qu'une fourniture du service ou du produit n'a pas lieu,
dans lequel l'ordinateur d'authentification est agencé pour vérifier au cours d'une première étape de vérification si l'information d'authentification émise satisfait à l'information de réponse reçue.

14. Système selon la revendication 13, dans lequel l'ordinateur client, après réception de l'information d'authentification, est agencé pour envoyer à l'ordinateur fournisseur, par l'intermédiaire du premier réseau de communications, une information de confirmation correspondant à l'information d'authentification, dans lequel l'ordinateur client est agencé pour composer, en fonction de l'information de confirmation, une information de double vérification et l'envoyer à l'ordinateur d'authentification, et dans lequel l'ordinateur d'authentification est agencé pour effecteur une seconde étape de vérification, au cours de laquelle il est vérifié si l'information de double vérification correspond à l'information de réponse.

15. Système selon l'une quelconque des revendications 13-14, **caractérisé en ce que** l'ordinateur d'authentification fait partie d'une institution indépendante du fournisseur, telle que, par exemple, une institution bancaire ou une institution de vérification indépendante du client et du fournisseur.

16. Système selon la revendication 15, **caractérisé en ce que** l'institution (B) gère un reste de crédit du client (K), dans lequel l'ordinateur d'authentification de l'institution (B) est agencé pour transférer au fournisseur (V) à partir du crédit bancaire du client (K) un prix d'achat convenu durant la fourniture lorsque l'autorisation de fourniture a été envoyée au fournisseur.

17. Système selon l'une quelconque des revendications 13-16, **caractérisé en ce que** l'information de commande, l'information fournisseur, et l'information de réponse comportent un code postal du client (K), dans lequel l'unité d'authentification est agencée pour vérifier au cours d'une troisième étape de vérification si le code postal de l'information fournisseur correspond au code postal de l'information de réponse.

18. Système selon les revendications 14 et 17, dans lequel l'information de confirmation et l'information de double vérification comprennent également un code postal du client, dans lequel l'ordinateur d'authentification est agencé pour vérifier au cours d'une quatrième étape de vérification si le code postal mémorisé dans l'information fournisseur, l'information de réponse, l'information de confirmation et l'information de double vérification est toujours le même.

19. Système selon l'une quelconque des revendications 13 à 18, **caractérisé en ce que** l'information d'authentification comporte une description des produits et/ou des services demandés par le client (K).

20. Système selon l'une quelconque des revendications 13 à 19, **caractérisé en ce que** l'unité d'authentification (B) est agencée pour conserver pendant une période de temps limitée l'information de réponse et/ou l'information fournisseur reçue d'un client (K) et/ou d'un fournisseur (V).

21. Système selon au moins la revendication 13, dans lequel l'ordinateur d'authentification fait partie d'un système calculateur du fournisseur.

22. Système selon l'une quelconque des revendications 13 à 21, dans lequel l'ordinateur d'authentification est agencé pour émettre l'information d'authentification et recevoir l'information de réponse sous la forme d'un message WAP ou SMS.

23. Support de données, tel qu'une CD-ROM, une carte à puce, un disque souple, ou analogue, dans lequel le support de données est muni d'une information numérique, qui, lorsqu'elle est entrée dans l'ordinateur d'un client, rend cet ordinateur approprié en tant qu'ordinateur client apparemment prévu pou un système selon l'une quelconque des revendications 13-22.

24. Support de données selon la revendication 23, **caractérisé en ce qu'**il s'agit d'un CD-ROM de dimensions d'une carte de crédit.

25. Support de données selon la revendication 23 ou 24, **caractérisé en ce que** l'information mémorisée dans celui-ci, lorsqu'elle est entrée dans un ordinateur, est telle que l'ordinateur client guide entièrement automatiquement le client à travers le processus dee commande.
